# EUROPÄISCHE PATENTSCHRIFT

(11) **EP 0 934 191 B1**
(45) Veröffentlichungstag und Bekanntmachung des Hinweises auf die Patenterteilung: **31.07.2002**
(21) Anmeldenummer: 97949890.4
(22) Anmeldetag: 07.11.1997
(51) Int. Cl.: B62J 1/08, B62K 19/36

(54) **SATTELSTÜTZE, INSBESONDERE FÜR EIN FAHRRAD**
SEAT POST, ESPECIALLY FOR A BICYCLE
TIGE DE SELLE, NOTAMMENT POUR BICYCLETTE

(30) Priorität: 08.11.1996 DE 19646138
(43) Veröffentlichungstag der Anmeldung: 11.08.1999
(73) Patentinhaber: Kelch, Ursula, 24768 Rendsburg (DE)
(72) Erfinder: Kelch, Ursula, 24768 Rendsburg (DE)
(74) Vertreter: Vollmann, Heiko, Dipl.-Ing.
(86) Internationale Anmeldenummer: DE9702610
(87) Internationale Veröffentlichungsnummer: WO9821084

(56) Entgegenhaltungen:
- DE-A- 3 345 981
- DE-U- 9 417 312
- FR-A- 2 729 631

## Beschreibung

Die Erfindung betrifft eine Sattelstütze für insbesondere ein Fahrrad, mit welcher der Sattel an dem Rahmen des Fahrrades oder dergleichen befestigbar ist.

Die herkömmlichen Fahrrad-Sattelstützen bestehen aus einer rohrförmigen Stange, deren einer Endabschnitt in das dafür bestimmte Rohr des Fahrradrahmens eingesteckt und daran durch Verschrauben festgeklemmt wird. An dem anderen Endabschnitt der Stange wird der Sattel ebenfalls durch Verschrauben in einer Stellung festgeklemmt, in der die Sattelspitze in Fahrrichtung zeigt. Eine solche Sattelstütze mit einem daran befestigten Sattel hat für die radfahrende Person eine Reihe von Nachteilen.

Ein hauptsächlicher Nachteil besteht in der ungenügenden Verkehrssicherheit für die radfahrende Person, aber auch für Verkehrsteilnehmer des nachfolgenden Verkehrs, weil der mangels eines Rückblickspiegels erforderliche, sichemde Rückblick der radfahrenden Person durch Sich-Umdrehen nach rückwärts mehr oder weniger eingeschränkt ist, so daß ein gewisser toter Winkel besteht, der von der Radfahrerin oder von dem Radfahrer nicht eingesehen werden kann. Der nachfolgende Verkehr kann daher nicht ausreichend eingesehen und beurteilt werden. Dies gilt insbesondere für radfahrende Personen, deren Bewegungsmöglichkeit zum Umdrehen für das rückwärtige Beurteilen des nachfolgenden Verkehrs eingeschränkt ist. Ein weiterer Nachteil der bekannten Sattelstütze äußert sich in der Ermüdung der radfahrenden Person, insbesondere nach längeren oder langen Radtouren aufgrund der Rückenanspannung, deren Ursachen, abgesehen vom häufigen Umdrehen zum Beobachten des rückwärtigen Verkehrsgeschehens, auch darin bestehen, daß aufgrund der wechselweisen Belastung der Fahrradpedalen eine abwechselnde Belastung auf den vorderen linken und rechten Seitenbereich des Sattels durch die Oberschenkel des Radfahrers erfolgt. Das ständige Wechselspiel zwischen linksseitiger und rechtsseitiger Seitenkraft auf den Sattel durch die Oberschenkel führt somit zu einer entsprechenden, ermüdenden Belastung der Wirbelsäule des Radfahrers.

Die Aufgabe der Erfindung besteht in der Schaffung einer verbesserten Sattelstütze für insbesondere Fahrräder, die der radfahrenden Person eine bessere Sicht nach hinten gestattet und Ermüdungserscheinungen beim Radfahren herabsetzt.

Diese Aufgabe wird mit den Merkmalen des Patentanspruchs 1 gelöst.

Durch diese Lösung ist die Sicht einer radfahrenden Person nach hinten erheblich verbessert, denn sie kann sich wesentlich leichter und weiter nach hinten umdrehen, weil sich der Sattel aus seiner Grundstellung heraus mitdreht, da er an einem drehbaren Oberteil der Sattelstütze befestigt ist. Der tote Winkel ist beim Rückschauen während der Fahrt nun nicht mehr vorhanden, so daß das nachfolgende Verkehrsgeschehen gut überblickt werden kann. Dadurch ist die Unfallgefahr sowohl für die radfahrende Person selbst als auch für die anderen Verkehrsteilnehmer wesentlich herabgesetzt. Wenn der Blick der radfahrenden Person wieder nach vorn gerichtet wird, dreht sich der Sattel wieder in seine Grundstellung, d. h. mit seiner Spitze in Fahrrichtung nach vorn, zurück. Die von der Grundstellung des Sattels nach beiden Seiten mögliche Sattelverdrehung kommt besonders Personen mit einem Rückenleiden oder mit Bewegungseinschränkungen beim Umdrehen nach hinten zugute. Des weiteren werden mit der erfindungsgemäßen Ausbildung der Sattelstütze Ermüdungen im Rückenbereich vermieden, da die entsprechende Muskulatur bei längeren oder langen Radfahrten nicht verspannt ist, zumindest aber die Verspannung wesentlich gemildert ist. Als weiterer Vorteil der erfindungsgemäßen Sattelstütze hat sich herausgestellt, daß die üblichen Schlingerbewegungen beim Geradeausfahren während des Rückblickens ebenfalls vermieden oder stark herabgesetzt sind, weil der hierfür ursächlichen Seitenkraft auf den Sattel durch die Oberschenkel der radfahrenden Person infolge der drehnachgiebigen Sattelstütze bzw. durch den dadurch drehnachgiebigen Sattel eine diesbezügliche Wirkung im wesentlichen genommen ist. Das Fahrrad bleibt somit besser in der geraden Fahrlinie, was ebenfalls zu einer erhöhten Fahrsicherheit beiträgt.

In einer vorteilhaften Ausbildung der erfindungsgemäßen Sattelstütze ist die Drehverbindungskonstruktion so ausgestaltet, daß sie nach Entlastung des den Sattel tragenden Bauteils, d. h. wenn die Seitenkraft auf den Sattel fortgefallen ist, dessen selbsttätige Rückstellung in seine Grundstellung gestattet. Hierdurch stellt sich der Sattel automatisch in seine Grundstellung zurück, d. h. mit seiner Spitze nach vorn in Fahrrichtung. Eine sehr einfache Ausführung der vorgeschlagenen Sattelstütze besteht darin, daß die Drehverbindungskonstruktion durch ein gummielastisches Material für die selbsttätige Rückstellung des den Sattel tragenden Bauteiles gebildet ist, wobei vorteilhaft für dieses Material ein Elastomer vorgesehen ist.

Die Drehverbindungskonstruktion der beiden starren Bauteile ist des weiteren so ausgebildet, daß sich der Sattel aus seiner Grundstellung nach beiden Seiten jeweils um etwa 45° verdrehen kann.

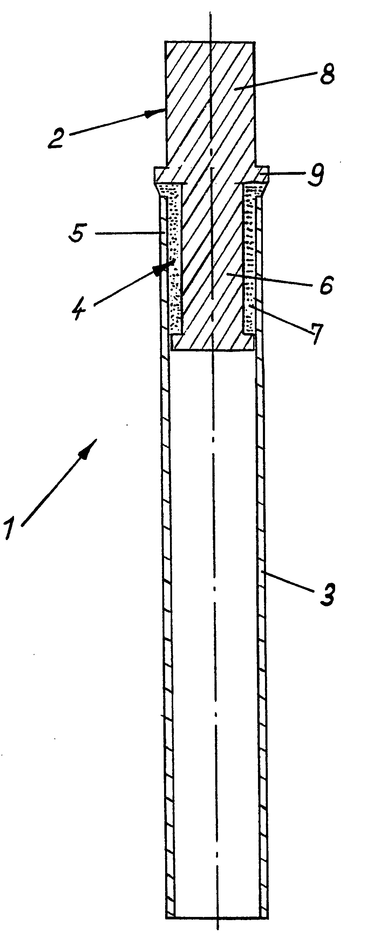

Die Erfindung ist nachstehend anhand eines in der anliegenden Zeichnung dargestellten Ausführungsbeispieles näher erläutert. Die einzige Figur der Zeichnung zeigt einen axialen Längsschnitt durch das Ausführungsbeispiel.

Die beispielsweise, allgemein mit 1 bezeichnete Sattelstütze umfaßt ein erstes starres Bauteil 2, an dem der Sattel eines Fahrrades anbringbar ist, und ein zweites starres Bauteil 3, welches in das entsprechende Rohr des Rahmens eines Fahrrades eingeführt und darin durch Verschrauben festgeklemmt wird. Das zweite Bauteil 3 ist vorteilhaft ein Rohrteil, dessen oberer hohlzylindrischer Abschnitt als Verbindungsabschnitt 5 für das erste Bauteil, das den Sattel trägt, dient, in welchen das erste Bauteil 2 mit seinem zylindrischen Verbindungsabschnitt 6 koaxial hineinragt. Die beiden Verbindungsabschnitte 5 und 6 sind so ausgeführt, daß zwischen ihnen ein ringförmiger Zwischenraum 7 ausgebildet ist, um darin Rückstellmittel für das erste starre Bauteil 2 vorzusehen, wie noch klar wird.

Das erste starre Bauteil 2 weist zusätzlich einen Zapfen 8 auf, an dem der (nicht dargestellte) Sattel befestigt wird, z. B. durch eine Klemmverbindung.

Die beiden Bauteile 2 und 3 sind im Bereich ihrer Verbindungsabschnitte 5 und 6 durch eine Drehverbindungskonstrukäon 4 miteinander verbunden, derart, daß das erste Bauteil 2 aus einer Grundstellung, die auch die Grundstellung des Sattels ist, nach links und rechts in einem gewissen Winkelbereich verstellt werden kann. Die Drehverstellung des Bauteiles 2 erfolgt über den daran befestigten Sattel dadurch, daß auf den Sattel eine seitliche Verdrehkraft durch die radfahrende Person ausgeübt wird, wenn diese sich beim Radfahren nach hinten umdreht. Wenn sich die Person wieder zurückwendet und in Fahrrichtung blickt, erfolgt wieder eine Rückdrehung des Sattels und damit des Bauteils 2 in die Ausgangs- bzw. Grundstellung. Die Drehverbindungskonstruktion ist dabei des weiteren so ausgebildet, daß der Sattel bei Nichtbelastung bzw. Rückstellung seine Grundstellung sicher einnimmt. Hierzu ist es vorteilhaft, die Drehverbindungskonstruktion so auszubilden, daß die Grundstellung nach Entlastung des ersten Bauteiles 2 bzw. des Sattels selbsttätig eingenommen wird, d. h. daß sich das den Sattel tragende Bauteil 2 automatisch in seine Grundstellung zurückstellt.

Die Drehverbindungskonstruktion 4 besteht aus einem gummielastischen Material, das mit den beiden Verbindungsabschnitten 5 und 6 der Bauteile 3 bzw. 2 durch Anvulkanisieren miteinander fest verbunden ist. Ein bevorzugtes Material hierfür ist ein Elastomermaterial.

Die Drehverbindungskonstruktion ist in jedem Fall so ausgebildet, daß sie eine selbsttätige Rückstellung des ersten Bauteiles 2 in seine stabile Grundstellung bewirkt, wenn die auf dieses Bauteil wirkende Verdrehkraft entfallen ist.

Die Drehverbindungskonstruktion 4 ist femer so ausgebildet, daß die Drehverstellung des ersten Bauteiles 2 aus der Grundstellung um mindestens etwa 45° nach beiden Seiten möglich ist.

In weiterer Ausgestaltung des Ausführungsbeispiels kann so vorgegangen sein, daß zwischen dem Zapfen 8 und dem Verbindungsabschnitt 6 des ersten Bauteiles 2 ein äußerer Abstützbund 9 vorgesehen ist, der das zweite Bauteil 3 im Bereich seines Verbindungsabschnittes 5 radial auswärts überragt. Dabei kann so vorgegangen sein, daß zwischen diesem Bund 9 und dem Ende des Verbindungsabschnittes 5 ein kleiner Zwischenraum besteht, der ebenfalls mit gummielastischem Material ausgefüllt ist, wie es in der Zeichnung dargestellt ist. Hierdurch stützt sich das den Sattel tragende Bauteil 2 mittelbar oder unmittelbar auf dem zweiten Bauteil 3 ab, das in dem entsprechenden Rohr des Fahrradrahmens befestigbar ist. Aufgrund des Vorsehens des Bundes 9 wird die Drehverbindungskonstruktion von einer vertikalen Belastung im wesentlichen befreit, die durch die Belastung des Sattels durch die radfahrende Person gegeben ist.

Die vorstehend beschriebene Sattelstütze eignet sich besonders für normale Fahrräder aller Art. Sie ist aber auch geeignet für Fahrräder mit Hilfsmotor oder sogenannte Mofas, die im wesentlichen ebenfalls keine Rückblickspiegel für den Benutzer aufweisen, sowie auch für solche Motorräder, bei denen die beschriebene Sattelstütze von Vorteil sein kann, z. B. Leichtkraft-Motorräder.

## Patentansprüche

1. Sattelstütze, insbesondere für ein Fahrrad, mit welcher der Sattel an dem Rahmen des Fahrrades oder dergleichen befestigbar ist, wobei die Stütze (1) ein erstes starres Bauteil (2), das mit dem Sattel verbindbar ist, und ein zweites starres Bauteil (3), das an dem Fahrradrahmen befestigt ist, umfaßt und wobei beide Bauteile durch eine Drehverbindungskonstruktion (4), die eine Rückstellung des ersten Bauteiles und damit des Sattels in seine Grundstellung nach seiner seitlichen Verdrehung ermöglicht, miteinander verbunden sind und wobei die beiden starren Bauteile (2, 3) je einen zylindrischen Verbindungsabschnitt (5, 6) aufweisen und mit diesem Abschnitt koaxial ineinandergreifen, **dadurch gekennzeichnet, daß** die koaxial ineinandergreifenden Verbindungsabschnitte (5, 6) der starren Bauteile (2, 3) zwischen sich einen ringförmigen Zwischenraum (7) bilden, daß in diesem Zwischenraum die die beiden starren Bauteile verbindende Drehverbindungskonstruktion (4) vorgesehen ist und daß die Drehverbindungskonstruktion aus einem gummielastischem Material besteht.

2. Sattelstütze nach Anspruch 1, **dadurch gekennzeichnet, daß** das erste starre Bauteil (2) zusätzlich einen Zapfen (8) für die Anbringung des Sattels daran aufweist und daß das zweite starre Bauteil (3) aus einem Rohr besteht, in dessen dem Sattel zugekehrten Verbindungsabschnitt (5) der Verbindungsabschnitt (6) des ersten Bauteiles (2) eingreift.

3. Sattelstütze nach Anspruch 2, **dadurch gekennzeichnet, daß** zwischen dem Zapfen (8) und dem Verbindungsabschnitt (6) des ersten starren Bauteiles (2) ein äußerer Abstützbund (9) vorgesehen ist, der das zweite starre Bauteil (3) radial auswärts überragt und sich darauf unmittelbar oder unmittelbar abstützt.

4. Sattelstütze nach Anspruch 1, 2 oder 3, **dadurch gekennzeichnet, daß** das gummielastische Material ein Elastomermaterial ist.

5. Sattelstütze nach einem der Ansprüche 1 bis 4, **dadurch gekennzeichnet, daß** die gummielastische Drehverbindungskonstruktion (4) eine Drehverstellung des ersten starren Bauteiles (2) aus seiner Grundstellung um mindestens etwa 45° nach beiden Seiten ermöglicht.

## Claims

1. A saddle support, in particular for a bicycle, with which the saddle is fastenable on the frame of the bicycle or likewise, wherein the post (1) comprises a first rigid component (2) which is connectable to the saddle, and a second rigid component (3) which is fastened on the bicycle frame, and wherein the two components are connected to one another by way of a pivotal connection design (4) which permits a return movement of the first component and thus of the saddle into its basic position after its lateral rotation, and wherein the two rigid components (2, 3) in each case comprise a cylindrical connecting section (5,6) and coaxially engage into one another with this section, **characterised in that** the coaxially engaging connection sections (5,6) of the rigid components (2,3) between them form an annular intermediate space (7), that in this intermediate space there is provided the pivotal connection design (4) connecting the two rigid components, and that the pivotal connection design consists of a rubber-elastic material.

2. A saddle support according to claim 1, **characterised in that** the first rigid component (2) additionally comprises a peg (8) for attaching the saddle thereon and that the second rigid component (3) consist of a tube in whose connection section (5) facing the saddle there engages the connection section (6) of the first component (2).

3. A saddle support according to claim 2, **characterised in that** between the peg (8) and the connection section (6) of the first rigid component (2) there is provided an outer support collar (9) which projects radially outwardly beyond the second rigid component (3) and is directly or indirectly supported thereon.

4. A saddle support according to claim 1, 2 or 3, **characterised in that** the rubber-elastic material is an elastomer material.

5. A saddle support according to claim 1 or 4, **characterised in that** the rubber-elastic pivotal connection design (4) permits a pivotal adjustment of the first rigid component (2) from its basic position by at least about 45° to both sides.

## Revendications

1. Support de selle, notamment pour une bicyclette, à l'aide duquel la selle peut être fixée au cadre de la bicyclette ou d'un objet analogue, le support (1) comprenant un premier élément de construction rigide (2), qui peut être relié à la selle, et un second élément de construction rigide (3), qui est fixé au cadre de bicyclette, et les deux éléments de construction étant assemblés l'un à l'autre au moyen d'une structure de jonction tournante (4), qui permet un retour du premier élément de construction et, avec lui, de la selle, dans sa position normale, après une rotation de cette dernière sur le côté, les deux éléments de construction rigides (2, 3) comportant chacun un tronçon d'assemblage cylindrique (5, 6) et pénétrant coaxialement l'un dans l'autre par ce tronçon, **caractérisé en ce que** les tronçons d'assemblage (5, 6), pénétrant coaxialement l'un dans l'autre, des éléments de construction rigides (2, 3) définissent entre eux un interstice (7) de forme annulaire, **en ce que** dans cet interstice, est prévue la structure de jonction tournante (4), qui relie les deux éléments de construction rigides, et **en ce que** la structure de jonction tournante est constituée d'un matériau possédant l'élasticité du caoutchouc.

2. Support de selle selon la revendication 1, **caractérisé en ce que** le premier élément de construction rigide (2) comporte, en plus, un tenon (8) pour le montage de la selle sur lui et **en ce que** le second élément de construction rigide (3) est constitué par un tube, le tronçon d'assemblage (6) du premier élément de construction (2) s'engageant alors dans le tronçon d'assemblage (5), dirigé vers la selle, de ce tube.

3. Support de selle selon la revendication 2, **caractérisé en ce qu'**entre le tenon (8) et le tronçon d'assemblage (6) du premier élément de construction rigide (2), il est prévu un collet d'appui extérieur (9) qui dépasse, radialement vers l'extérieur, du second élément de construction rigide (3) et s'appuie directement ou indirectement sur ce dernier.

4. Support de selle selon la revendication 1, 2 ou 3, **caractérisé en ce que** le matériau possédant l'élasticité du caoutchouc est un matériau élastomère.

5. Support de selle selon l'une des revendications 1 à 4, **caractérisé en ce que** la structure de jonction tournante (4), possédant l'élasticité du caoutchouc, permet un décalage angulaire du premier élément de construction rigide (2), vis-à-vis de sa position normale, d'au moins 45° environ, des deux côtés.
